(19) Europäisches Patentamt / European Patent Office / Office européen des brevets

(11) **EP 2 221 981 B1**

(12) **FASCICULE DE BREVET EUROPEEN**

(45) Date de publication et mention
de la délivrance du brevet:
**09.05.2012 Bulletin 2012/19**

(51) Int Cl.:
***H04B 1/707*** *(2011.01)*

(21) Numéro de dépôt: **10153921.1**

(22) Date de dépôt: **18.02.2010**

(54) **Procédé d'estimation d'un décalage de fréquence porteuse dans un récepteur de signaux de télécommunication, notamment un dispositif mobile**

Verfahren zur Trägerfrequenzversatzschätzung in einem Telekommunikationssignalempfänger, insbesondere in einer mobilen Einrichtung

Method for estimating a carrier frequency shift in a telecommunication signal receiver, especially a mobile device

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.02.2009 FR 0951144**

(43) Date de publication de la demande:
**25.08.2010 Bulletin 2010/34**

(73) Titulaire: **Commissariat à l'Énergie Atomique et aux Énergies Alternatives
75015 Paris (FR)**

(72) Inventeur: **Dehmas, François
38450, Vif (FR)**

(74) Mandataire: **Bonnet, Michel
Cabinet Bonnet
93, rue Réaumur
75002 Paris (FR)**

(56) Documents cités:
**WO-A1-01/61880        WO-A2-02/080404
US-A1- 2008 205 492**

- **BERNIER C ET AL: "An ultra low power SoC for 2.4 GHz IEEE802.15.4 wireless communications" ESSCIRC 2008 - 34TH EUROPEAN SOLID-STATE CIRCUITS CONFERENCE IOP PUBLISHING BRISTOL, UK, 2008, pages 426-429, XP002550344 ISBN: 9781424423613**

**Description**

La présente invention concerne un procédé d'estimation d'un glissement de fréquence porteuse dans un récepteur de signaux de télécommunication. Elle concerne aussi un dispositif mobile de télécommunication et un programme d'ordinateur aptes à mettre en oeuvre ce procédé.

D'une façon générale, entre un émetteur et un récepteur, la fréquence porteuse utilisée à l'émission pour la modulation d'un signal et la fréquence utilisée en réception pour la démodulation de ce signal ne peuvent jamais être rigoureusement identiques. Un phénomène de glissement de fréquence porteuse, généralement qualifié de « offset » de fréquence porteuse, est ainsi nécessairement observé entre l'émetteur et le récepteur. En outre, selon la précision des oscillateurs utilisés dans les émetteurs et les récepteurs, ce glissement peut être plus ou moins important et dégrade la réception des signaux si aucune correction n'est apportée.

L'invention s'applique notamment aux télécommunications à basse consommation dans lesquelles les récepteurs sont des dispositifs mobiles dont il faut limiter la consommation d'énergie, c'est-à-dire dans lesquels il est nécessaire d'implémenter des algorithmes numériques les plus simples possibles impliquant un minimum d'opérations. Par ailleurs, pour ces mêmes raisons de consommation, mais également pour des questions de coûts, les oscillateurs utilisés dans ces récepteurs peuvent présenter une faible précision. Une bonne estimation et une correction efficace du glissement de fréquence porteuse s'avèrent alors indispensables.

Il en est de même du glissement de la fréquence des symboles codés transmis qui est toutefois directement lié au glissement de fréquence porteuse. En effet, dans un dispositif d'émission/réception, la fréquence porteuse et les fréquences d'échantillonnage sont générées à partir d'un même oscillateur. Ainsi entre un émetteur et un récepteur, le glissement relatif de la fréquence porteuse et le glissement relatif de la fréquence des symboles codés sont égaux. L'estimation d'un seul de ces glissements, en premier lieu le glissement de fréquence porteuse, est donc suffisante.

Un domaine concerné est celui par exemple des communications à basse consommation d'énergie utilisant de l'étalement de spectre à séquence directe généralement qualifié d'étalement DSSS (de l'Anglais « Direct Séquence Spread Spectrum »). Selon ce principe, à un symbole d'information on associe une séquence d'étalement binaire de L bits appelés « chips ». Ces chips modulent ensuite la porteuse en phase ou en fréquence d'un signal à enveloppe constante. La communication se fait en mode de transmission par paquets et chaque paquet comporte un préambule qui est une suite prédéterminée de symboles codés par étalement DSSS, cette suite prédéterminée étant connue du récepteur. Ce préambule permet ainsi la synchronisation du récepteur pour démoduler un paquet reçu.

L'invention peut ainsi notamment être mise en oeuvre dans le domaine particulier des communications sans fil entre un émetteur et un récepteur dont la couche physique est conforme à celle décrite dans le standard IEEE 802.15.4 pour la bande ISM (pour « Industriel, Scientifique et Médical ») à 2,4-2,48 GHz, utilisant une modulation de type O-QPSK.

Dans ce domaine particulier, dans lequel un signal est reçu par paquets contenant chacun un préambule comportant huit symboles #0 codés par étalement DSSS sur trente-deux chips, un procédé d'estimation et de correction de glissement de fréquence porteuse est décrit dans la demande de brevet américain publiée sous le numéro US 2007/0002937. Selon ce procédé, les séquences d'étalement reçues sont différenciées afin de réaliser une détection différentielle.

Dans ce document, l'estimation du glissement de fréquence porteuse est plus précisément réalisée pendant l'étape de synchronisation qui est effectuée sur le préambule d'un paquet quelconque. Le signal reçu est différencié par calcul du produit complexe conjugué entre un échantillon et un autre retardé d'une période chip (temps entre la réception de deux chips de la séquence d'étalement du symbole #0), puis corrélé avec une séquence binaire de référence stockée et/ou générée par le récepteur et correspondant à la séquence d'étalement du symbole #0. Ce traitement est éventuellement suivi d'une accumulation pour cumuler les résultats portant sur les huit séquences d'étalement du symbole #0 du préambule. Le signal ainsi obtenu sert à la fois à la synchronisation et à l'estimation du glissement de fréquence porteuse.

En pratique, lorsque la synchronisation est réalisée, les parties réelles Re et imaginaires Im du signal obtenu fournissent une valeur qui est fonction du glissement de fréquence porteuse $\Delta f$ :

$$\mathrm{Re} = A\cos(2\pi\,\Delta f\,T_C)\ \text{ et }\ \mathrm{Im} = A\sin(2\pi\,\Delta f\,T_C)\,,$$

où A est l'amplitude du signal obtenu et $T_C$ la période chip précitée.

La correction du glissement de fréquence porteuse se fait ensuite en multipliant la corrélation de chaque séquence d'étalement reçue différenciée avec toutes les séquences d'étalement possibles différenciées par le nombre complexe $A\cos(2\pi\,\Delta f\,T_C)$-$j\,A\sin(2\pi\,\Delta f\,T_C)$. On notera que dans le cas du standard IEEE 802.15.4 qui implique une modulation O-QPSK, il y a seize séquences d'étalement différentes possibles pseudo orthogonales de trente-deux chips chacune.

Sachant que chaque différentiation entre échantillons décalés d'une période chip coûte une multiplication complexe, soit quatre multiplications réelles et deux additions réelles, que trente et une différentiations sont calculées par séquence, que le coût du produit d'une séquence avec une séquence de référence est négligeable parce qu'il consiste uniquement en des changements de signes, que la somme calculée pour la corrélation comporte trente additions complexes, soit soixante additions réelles, et que la correction du glissement de fréquence porteuse coûte une multiplication complexe, le coût global du décodage de chaque séquence d'étalement reçue peut se traduire en :

- (31 x 4 + 4) x 16 = 128 x 16 multiplications réelles, et
- (31 x 2 + 60 + 2) x 16 = 124 x 16 additions réelles.

En termes de performances, on montre que l'on atteint avec ce procédé de détection différentielle un taux d'erreurs par paquet PER (de l'Anglais « Packet Error Rate ») de 1 %, pour des paquets de 20 octets (conformément au standard IEEE 802.15.4 dans la bande des 2,4 GHz), un glissement relatif de fréquence porteuse de 80 ppm (i.e. 80 parties par million) et un rapport signal sur bruit de 12,5 dB. Avec des paquets de taille maximale fixée à 127 octets et le même glissement relatif de fréquence porteuse de 80 ppm, on atteint le taux d'erreurs par paquet PER de 1 % pour un rapport signal sur bruit de 14,5 dB.

Une autre solution consiste à couper les séquences d'étalement en plusieurs portions successives, à effectuer une corrélation partielle sur chacune des portions, puis à sommer les modules des corrélations partielles calculées. On obtient ainsi de meilleures performances par une meilleure résistance au glissement de fréquence porteuse que lorsque l'on calcule des corrélations complètes. A partir des corrélations partielles calculées, il est aussi possible d'estimer le glissement de fréquence porteuse lorsque celui-ci devient trop important pour être négligé.

L'invention concerne plus précisément ce type de procédé d'estimation d'un glissement de fréquence porteuse dans un récepteur de signaux de télécommunication, comportant :

- une étape de calcul de corrélations partielles portant sur plusieurs portions successives d'une séquence binaire de référence, chaque corrélation partielle étant calculée entre une portion d'un signal reçu par le récepteur à ladite fréquence porteuse, ce signal comportant ladite séquence binaire de référence, et une portion prédéterminée de ladite séquence binaire de référence stockée et/ou générée par le récepteur, selon plusieurs positions relatives possibles entre le signal reçu et la portion prédéterminée, et
- une étape de détermination du glissement de fréquence porteuse à partir des corrélations partielles calculées.

Un tel procédé est par exemple décrit dans la demande de brevet internationale publiée sous le numéro WO 01/61880. Dans ce document, le glissement de fréquence porteuse est estimé à partir des corrélations partielles calculées par extraction de l'argument de chacun des nombres complexes issus des corrélations partielles, ce qui s'avère trop coûteux en termes de calculs et donc désavantageux dans le cas d'une application nécessitant une basse consommation d'énergie.

Le document WO 02/080404 divulgue un procédé d'estimation d'un glissement de fréquence dans un récepteur de signaux de télécommunication. Mais ce procédé ne comporte pas d'étape de calcul de corrélations partielles portant sur plusieurs portions successives d'une séquence binaire de référence. Il ne comporte donc pas non plus d'étape de détermination du glissement de fréquence à partir de corrélations partielles calculées.

Le document intitulé « An ultra low power Soc for 2.4GHz IEEE802.15.4 wireless communications », de C. Bernier et al, ESSIRC 2008, 34th European Solid-State Circuits Conference, Edinburgh, 15-19 septembre 2008, pages 426-429, ne porte pas sur un procédé d'estimation d'un glissement de fréquence porteuse dans un récepteur de signaux de télécommunication.

Enfin, le document US 2008/0205492 divulgue un procédé d'estimation d'un glissement de fréquence dans un récepteur de signaux de télécommunication. Mais ce procédé ne comporte pas d'étape de calcul de corrélations partielles portant sur plusieurs portions successives d'une séquence binaire de référence. Il ne comporte donc pas non plus d'étape de détermination du glissement de fréquence porteuse à partir de corrélations partielles calculées.

Il peut ainsi être souhaité de prévoir un procédé d'estimation d'un glissement de fréquence porteuse performant qui permette de s'affranchir des problèmes et contraintes précités.

L'invention a donc pour objet un procédé d'estimation d'un glissement de fréquence porteuse dans un récepteur de signaux de télécommunication, comportant :

- une étape de calcul de corrélations partielles portant sur plusieurs portions successives d'une séquence binaire de référence, chaque corrélation partielle étant calculée entre une portion d'un signal reçu par le récepteur à ladite fréquence porteuse, ce signal comportant ladite séquence binaire de référence, et une portion prédéterminée de ladite séquence binaire de référence stockée et/ou générée par le récepteur, selon plusieurs positions relatives possibles entre le signal reçu et la portion prédéterminée, et

- une étape de détermination du glissement de fréquence porteuse à partir des corrélations partielles calculées,

comportant en outre une étape de sélection d'une position de synchronisation parmi les positions relatives possibles entre le signal reçu et la séquence binaire de référence stockée et/ou générée par le récepteur, et dans lequel l'étape de détermination comporte l'estimation d'un déphasage entre corrélations partielles calculées à la position de synchronisation sélectionnée.

Ainsi, tout en conservant de meilleures performances que les solutions différentielles, ce procédé est en outre simple à mettre en oeuvre parce qu'il base son estimation du glissement de fréquence porteuse sur l'estimation d'un déphasage entre corrélations partielles calculées.

De façon optionnelle, l'étape de détermination comporte l'estimation d'un déphasage moyen entre les corrélations partielles successives calculées à la position de synchronisation sélectionnée, notamment par estimation de l'espérance mathématique du produit entre deux corrélations partielles successives quelconques calculées à la position de synchronisation sélectionnée.

De façon optionnelle également, le glissement de fréquence porteuse est déterminé selon la relation

$$\hat{\Delta f} = \frac{N}{2\pi PL}\hat{\Delta \varphi} \text{ , où } \hat{\hat{\Delta f}} \text{ est le glissement de fréquence porteuse normalisé par une fréquence d'échantillonnage du}$$

signal reçu, $\hat{\Delta\varphi}$ le déphasage moyen estimé, N le nombre de corrélations partielles successives, L le nombre de bits de la séquence binaire de référence, UN représentant alors le nombre de bits de chaque portion sur laquelle est réalisée une corrélation partielle, et P le nombre d'échantillons par bit de la séquence binaire de référence.

De façon optionnelle également, un procédé d'estimation d'un glissement de fréquence porteuse selon l'invention peut en outre comporter une étape de correction du glissement de fréquence porteuse par compensation de ce glissement sur le signal reçu à l'aide de la valeur déterminée du glissement de fréquence porteuse.

De façon optionnelle également, l'étape de correction comporte :

- une étape de calcul de coefficients de déphasages successifs, définis en fonction de la valeur déterminée du glissement de fréquence porteuse, et
- une étape d'application de ces coefficients de déphasages successifs à des échantillons du signal reçu.

De façon optionnelle également, les coefficients de déphasages successifs sont calculés par encadrements à l'aide de tableaux de données précalculées.

De façon optionnelle également, la séquence binaire de référence est obtenue par étalement de spectre à séquence directe d'un symbole de référence, notamment dans le cadre d'une transmission conforme à la norme IEEE 802.15.4 prévoyant une transmission de symboles par paquets, la séquence binaire de référence étant contenue dans le préambule de chaque paquet reçu.

De façon optionnelle également, le glissement de fréquence porteuse s'accompagnant d'un glissement de fréquence des symboles transmis, on compense le décalage engendré dans les échantillons prélevés par le récepteur par l'ajout ou la suppression d'un échantillon chaque fois que ce décalage devient supérieur, en avance ou en retard, à un demi pas d'échantillonnage.

L'invention a également pour objet un programme d'ordinateur téléchargeable depuis un réseau de communication et/ou enregistré sur un support lisible par ordinateur et/ou exécutable par un processeur, comprenant des instructions de code de programme pour l'exécution des étapes d'un procédé d'estimation d'un glissement de fréquence porteuse tel que défini précédemment, lorsque ledit programme est exécuté sur un ordinateur.

L'invention a également pour objet un dispositif mobile de télécommunication comportant des moyens d'estimation d'un glissement de fréquence porteuse, ces moyens comportant :

- des moyens de stockage et/ou de génération d'une séquence binaire de référence,
- des moyens de calcul de corrélations partielles portant sur plusieurs portions successives de la séquence binaire de référence, chaque corrélation partielle étant calculée entre une portion d'un signal reçu par le récepteur à ladite fréquence porteuse, ce signal comportant la séquence binaire de référence, et une portion prédéterminée de ladite séquence binaire de référence stockée et/ou générée par le dispositif mobile, selon plusieurs positions relatives possibles entre le signal reçu et la portion prédéterminée, et
- des moyens de détermination du glissement de fréquence porteuse à partir des corrélations partielles calculées,

comportant en outre des moyens de sélection d'une position de synchronisation parmi les positions relatives possibles entre le signal reçu et la séquence binaire de référence stockée et/ou générée par le dispositif mobile, les moyens de détermination comportant des moyens d'estimation d'un déphasage entre corrélations partielles calculées à la position de synchronisation sélectionnée.

L'invention sera mieux comprise à l'aide de la description qui va suivre, donnée uniquement à titre d'exemple et faite en se référant aux dessins annexés dans lesquels :

- la figure 1 illustre les étapes successives d'un procédé d'estimation d'un glissement de fréquence porteuse selon un mode de réalisation de l'invention,
- la figure 2 représente schématiquement la structure générale d'un dispositif mobile de télécommunication selon un mode de réalisation de l'invention,
- les figures 3 et 4 représentent en détail des moyens de calcul de corrélations partielles du dispositif mobile de la figure 2,
- la figure 5 représente en détail des moyens de détermination d'un glissement de fréquence porteuse du dispositif mobile de la figure 2,
- la figure 6 illustre graphiquement les performances des moyens de détermination de la figure 5 en termes d'erreur quadratique moyenne, et
- les figures 7 et 8 représentent en détail des moyens de décodage et de correction du dispositif mobile de la figure 2.

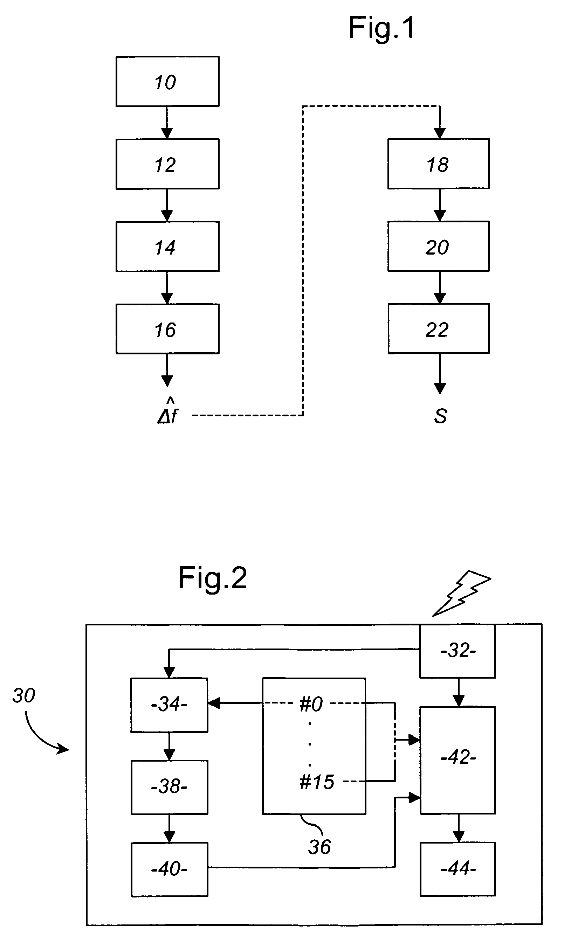

Le procédé d'estimation d'un glissement de fréquence porteuse représenté sur la figure 1 comporte une première étape 10 de calcul de N corrélations partielles exécutée par un récepteur de signaux de télécommunication. Ces N corrélations partielles portent sur N portions successives d'une séquence binaire de référence de L bits. Les portions successives étant par exemple toutes distinctes, de même taille et sans recouvrement, chacune d'entre elle comporte UN bits.

L'invention s'applique à tout type de communication, impliquant tout type de séquence binaire de référence. Mais, dans la suite de la description, on supposera, à titre d'exemple purement illustratif que la séquence binaire de référence est obtenue par étalement de spectre à séquence directe DSSS d'un symbole de référence, en particulier le symbole #0 d'une modulation O-QPSK répété huit fois dans le préambule de chaque paquet d'un signal transmis en mode paquet conformément à la norme IEEE 802.15.4. Comme indiqué précédemment, la séquence d'étalement du symbole #0 comporte $L = 32$ bits appelés chips. Elle sera notée s ou $(s_n)$, n étant un indice d'échantillonnage. De préférence, le pas d'échantillonnage est une fraction de la période chip. En notant P le nombre d'échantillons par chip, l'indice n de la séquence d'étalement $(s_n)$ varie de 0 à PL-1.

On note r ou $(r_n)$ un signal reçu et transposé en bande de base, échantillonné également à P échantillons par chip et comportant notamment la séquence d'étalement de référence pour permettre une synchronisation des signaux $(r_n)$ et $(s_n)$.

Chaque corrélation partielle est calculée à l'étape 10 entre une portion du signal r reçu et une portion prédéterminée de la séquence d'étalement de référence s, selon plusieurs positions relatives possibles entre le signal reçu et la portion prédéterminée, conformément à la relation suivante : $CP_n^{(k)} = \sum_{q=0}^{\frac{PL}{N}-1} r_{n+q+k\frac{PL}{N}} \times s^*_{q+k\frac{PL}{N}}$ , où n est l'indice exprimant le décalage en nombre d'échantillons entre les signaux r et s, k variant de 0 à N-1 est l'indice identifiant les N corrélations partielles et le symbole « * » exprime le complexe conjugué.

Soit $n_0$ la valeur de n pour laquelle les signaux r et s sont synchronisés. On a alors, pour tout n, $n_0 \leq n < n_0 + PL$ :

$$r_n = A \times s_{n-n_0} \times \exp(2\pi j\Delta f n + j\theta) + b_n,$$

où A est l'amplitude constante du signal reçu, $\Delta f$ est le glissement de fréquence porteuse normalisé par la fréquence d'échantillonnage du récepteur, $\theta$ est un déphasage constant et $b_n$ est un échantillon de bruit blanc gaussien centré, le signal reçu étant supposé entaché d'un bruit blanc additif gaussien centré.

Chaque corrélation partielle d'indice k s'exprime alors de la façon suivante :

$$CP_n^{(k)} = \sum_{q=0}^{\frac{PL}{N}-1} \left( A \times s_{n-n_0+q+k\frac{PL}{N}} \times \exp\left( 2\pi j\Delta f \left( n+q+k\frac{PL}{N} \right) + j\theta \right) + b_{n+q+k\frac{PL}{N}} \right) \times s^*_{q+k\frac{PL}{N}}.$$

Lors de l'étape de sélection 12 suivante, on détermine de façon classique la valeur de $n_0$. Par exemple, $n_0$ est sélectionné de la façon suivante :

$$n_0 = Arg \max_n \left( \sum_{k=0}^{N-1} \left| CP_n^{(k)} \right|^2 \right).$$

Sachant que $\forall k, |s_k|=1$, on obtient en $n_0$ une valeur particulière pour chaque corrélation partielle d'indice k :

$$CP_{n_0}^{(k)} = \sum_{q=0}^{\frac{PL}{N}-1} A \times \exp\left( 2\pi j\Delta f \left( n_0 + q + k\frac{PL}{N} \right) + j\theta \right) + \sum_{q=0}^{\frac{PL}{N}-1} b_{n_0+q+k\frac{PL}{N}} \times s^*_{q+k\frac{PL}{N}},$$

$$CP_{n_0}^{(k)} = A \times \exp\left( 2\pi j\Delta f \left( n_0 + k\frac{PL}{N} \right) + j\theta \right) \sum_{q=0}^{\frac{PL}{N}-1} \exp(2\pi j\Delta f q) + \sum_{q=0}^{\frac{PL}{N}-1} b_{n_0+q+k\frac{PL}{N}} \times s^*_{q+k\frac{PL}{N}},$$

et

$$CP_{n_0}^{(k)} = \begin{cases} A \times \exp\left( 2\pi j\Delta f \left( n_0 + k\frac{PL}{N} \right) + j\theta \right) \times \dfrac{\sin\left( \pi\Delta f \dfrac{PL}{N} \right)}{\sin(\pi\Delta f)} \exp\left( \pi j\Delta f \left( \dfrac{PL}{N} - 1 \right) \right) \\ + \sum_{q=0}^{\frac{PL}{N}-1} b_{n_0+q+k\frac{PL}{N}} \times s^*_{q+k\frac{PL}{N}} \end{cases}.$$

Ensuite, on passe à des étapes 14 et 16 de détermination du glissement de fréquence porteuse à partir de ces valeurs particulières des corrélations partielles.

En particulier, lors de l'étape 14, un déphasage entre corrélations partielles calculées à la position de synchronisation sélectionnée $n_0$ est estimé. Plus précisément c'est par exemple un déphasage moyen $\Delta\varphi$ entre les corrélations partielles successives calculées à la position de synchronisation sélectionnée $n_0$ qui est estimé. Ce déphasage moyen peut être exprimé en tant qu'argument de l'espérance mathématique suivante :

$$E\left[ CP^{*(k)}_{n_0} \times CP^{(k+1)}_{n_0} \right].$$

Or, en reprenant la dernière expression des corrélations partielles en $n_0$, on en déduit l'expression suivante pour l'espérance mathématique précitée :

$$E\left[ CP^{*(k)}_{n_0} \times CP^{(k+1)}_{n_0} \right] = A^2 \left( \frac{\sin\left( \pi\Delta f \dfrac{PL}{N} \right)}{\sin(\pi\Delta f)} \right)^2 \exp\left( 2\pi j\Delta f \frac{PL}{N} \right).$$

D'où :

$$\Delta\varphi = Arg\left(E\left[CP*_{n_0}^{(k)} \times CP_{n_0}^{(k+1)}\right]\right) = 2\pi\Delta f \frac{PL}{N}.$$

On remarque que ce déphasage moyen entre corrélations partielles successives calculées à la position de synchronisation sélectionnée $n_0$ est directement fonction du glissement de fréquence porteuse normalisé par la fréquence d'échantillonnage.

Sachant que l'espérance mathématique précitée peut elle-même être estimée simplement à l'aide d'une somme de produits reprenant les valeurs des corrélations partielles calculées précédemment en $n_0$, on en déduit une estimation $\hat{\Delta\varphi}$ du déphasage moyen $\Delta\varphi$:

$$\hat{\Delta\varphi} = Arg\left(\sum_{k=0}^{N-1} CP*_{n_0}^{(k)} \times CP_{n_0}^{(k+1)}\right).$$

$$S_{est} = \sum_{k=0}^{N-1} CP*_{n_0}^{(k)} \times CP_{n_0}^{(k+1)}.$$

Lors de l'étape 16 suivante, on estime donc le glissement de fréquence porteuse $\Delta f$ normalisé par la fréquence d'échantillonnage à l'aide de l'équation suivante :

$$\hat{\Delta f} = \frac{N}{2\pi PL}\hat{\Delta\varphi}.$$

En notant $f_e$ la fréquence d'échantillonnage et $\Delta_a f$ le glissement de fréquence porteuse exprimé de façon absolue, en remarquant en outre que pour éviter l'indétermination de $2\pi$ sur l'argument de l'estimation de l'espérance mathématique précitée il est nécessaire que $|\Delta\varphi|\leq\pi$, alors on en déduit une contrainte sur $\Delta_a f$ :

$$\left|\Delta_a f\right| \leq \frac{N f_c}{2PL},$$

$\left|\Delta_a f\right| \leq \dfrac{ND}{2L}$ où D est le débit des chips ($D=f_e/P$).

Une fois que le glissement de fréquence porteuse normalisé par la fréquence d'échantillonnage est estimé, il est possible de décoder les symboles contenus dans chaque paquet de données reçu par corrélation avec une version des seize symboles (en modulation O-QPSK) connus du récepteur. Au cours du décodage, de façon connue en soi, une corrélation complète ou plusieurs corrélations partielles portant sur chaque symbole possible peut ou peuvent être appliquée(s). Dans tous les cas, une correction doit être apportée aux chips de la séquence d'étalement reçue en tenant compte du glissement de fréquence porteuse estimé. Cette correction permet d'ailleurs de limiter le nombre de corrélations partielles à envisager si l'on choisit ce principe de décodage.

Ainsi, lors d'une étape 18, des coefficients de déphasages successifs $\alpha_k$ sont calculés en fonction de la valeur $\hat{\Delta f}$ estimée à l'étape 16 et destinés à s'appliquer (par une multiplication complexe) aux chips successifs de la séquence d'étalement r reçue pour corriger le glissement de fréquence porteuse. Ces coefficients prennent la forme suivante :

$$\alpha_k = \exp\left(-j2\pi \times P \times k \times \hat{\Delta f}\right).$$

En supposant que la séquence d'étalement r courante reçue commence en $n_1$, instant où elle est synchronisée avec la séquence d'étalement de référence, la correction s'effectue de la façon suivante :

$$v_{n_1+Pk} = r_{n_1+Pk} \times \alpha_k, 0 \leq k < N',$$

où N' est la taille des corrélations partielles ou de la corrélation totale choisie(s) pour le décodage de la séquence r et où les échanrillons $v_n$ de la séquence d'étalement corrigée v sont les valeurs qui sont corrélées aux séquences d'étalement de référence.

Les coefficients de déphasages successifs peuvent être obtenus par calcul direct, mais aussi à l'aide de tableaux de données précalculées pour éviter des calculs trigonométriques trop compliqués. Un premier tableau permet par exemple d'encadrer la phase de l'espérance mathématique estimée à l'étape 14 et un deuxième tableau permet d'en déduire les valeurs successives des coefficients $\alpha_k$.

De façon concrète, dans le cas particulier présenté précédemment d'une communication à modulation O-QPSK, pour une fréquence porteuse à 2,48 GHz, un débit de chips D = 2MChips/s, L = 32 chips, P = 2 échantillons par chip, N = 16 corrélations partielles pour l'estimation du glissement de fréquence porteuse, N' = 4 corrélations partielles pour le décodage, on peut choisir un pas fréquentiel de correction du glissement de fréquence porteuse à 62500 Hz, ce qui correspond à 1/32$^e$ du débit des chips et à un pas de glissement de 25 ppm.

On a alors $Arg(S_{est}) = 2\pi \times 4\hat{\Delta}f$ et $\alpha_k = \exp(-2\pi \times \hat{\Delta}f \times k)$.

On définit un premier tableau de données C tel que :

$$\forall k, 0 \leq k < 4, C[k] = \tan\left(2\pi\left(\frac{1}{32} + \frac{2}{32}k\right)\right).$$

On définit un deuxième tableau de données Tab tel que :

$$\forall n, 0 \leq n < 32, Tab[n] = \exp\left(j2\pi\frac{n}{32}\right).$$

Vu la symétrie trigonométrique des éléments de ce deuxième tableau de trente-deux valeurs, on pourrait se contenter de n'en mémoriser que huit valeurs, voire même simplement quatre en exploitant la symétrie entre les fonctions sinus et cosinus dans l'intervalle angulaire [0 ; $\pi$/2].

A partir de la valeur de $S_{est}$ obtenue à l'étape 14, on calcule les valeurs de Re($S_{est}$) et de Im($S_{est}$). On détermine l'indice $k_0$ tel que $C[k_0] \leq \left|\frac{\text{Im}(S_{est})}{\text{Re}(S_{est})}\right| < C[k_0 + 1]$, puis, à l'aide de l'indice $k_0$ trouvé et des signes de Re($S_{est}$) et Im($S_{est}$), on en déduit l'indice $n_0$ tel que Tab[2$n_0$] est une approximation de $S_{est}$ en valeur angulaire.

Si $n_0$ est inférieur ou égal à 8, c'est-à-dire si le glissement de fréquence porteuse normalisé par la fréquence d'échantillonnage est positif, on en déduit les huit coefficients de déphasages successifs à appliquer aux huit chips de la séquence d'étalement reçue de chacune des quatre corrélations partielles calculées pour le décodage, selon la relation suivante :

$$\alpha_k = Tab[k \times n_0 \mod 32]^*,$$

où le symbole « * » exprime le complexe conjugué.

Si $n_0$ est strictement supérieur à 8, c'est-à-dire si le glissement de fréquence porteuse normalisé par la fréquence d'échantillonnage est négatif, on en déduit les huit coefficients de déphasages successifs selon la relation suivante :

$$\alpha_k = Tab[k \times (n_0 - 16) \mod 32]^*.$$

Ensuite, lors d'une étape de corrélation 20, d'une part, la séquence d'étalement courante reçue r est corrigée à l'aide des coefficients $\alpha_k$ pour fournir la séquence d'étalement corrigée v et, d'autre part, la séquence d'étalement corrigée v est corrélée à chacune des séquences d'étalement de référence possibles selon le procédé de décodage choisi de corrélations partielles ou de corrélation totale. Dans le cas particulier d'une communication à modulation O-QPSK, seize valeurs de corrélation différentes sont fournies, chacune correspondant à l'une des séquences d'étalement de référence. La valeur absolue de chacune de ces seize valeurs de corrélation est ensuite calculée.

Enfin, lors d'une dernière étape de sélection 22, parmi les valeurs absolues obtenues à l'étape précédente, la valeur maximale est retenue et la séquence d'étalement de référence correspondante est sélectionnée. On en déduit ainsi le symbole S correspondant.

Si le nombre de corrélations partielles calculées pour le décodage est N' = 4, sachant que chaque correction dans une corrélation partielle à l'aide des coefficients $\alpha_k$ coûte sept multiplications complexes, soit vingt-huit multiplications réelles et quatorze additions réelles, que chaque calcul de valeur absolue pour chaque corrélation partielle implique deux multiplications réelles et une addition réelle, que le calcul d'une valeur absolue globale pour l'ensemble des corrélations partielles ajoute encore trois additions réelles, que le coût du produit d'une séquence avec une séquence de référence est négligeable parce qu'il consiste uniquement en des changements de signes et que la somme calculée pour chaque corrélation partielle comporte sept additions réelles, le coût global du décodage de chaque séquence d'étalement reçue peut se traduire en :

- (28 + 2) x 4 = 120 x 16 multiplications réelles, et
- (14 + 1 + 7) x 4 + 3 = 91 x 16 additions réelles.

On voit que cette solution nécessite 8 x 16 multiplications réelles et 33 x 16 additions réelles de moins que la solution préconisée dans le document US 2007/0002937. Elle est donc moins complexe en termes de calculs élémentaires à réaliser.

En termes de performances, des simulations montrent que, pour des paquets de 20 octets et un glissement relatif de fréquence porteuse de 80 ppm (i.e. 80 parties par million), on atteint avec cette solution un taux d'erreurs par paquet PER de 1 % pour un rapport signal sur bruit de 11,5 dB (au lieu de 12,5 dB dans la solution de détection différentielle du document US 2007/0002937). Avec des paquets de taille maximale fixée à 127 octets et le même glissement relatif de fréquence porteuse de 80 ppm, on atteint le taux d'erreurs par paquet PER de 1 % pour un rapport signal sur bruit de 13,7 dB (au lieu de 14,5 dB dans la solution de détection différentielle du document US 2007/0002937). On gagne donc environ 1 dB par rapport à la solution de détection différentielle.

On notera que le procédé d'estimation d'un glissement de fréquence porteuse décrit précédemment peut par exemple être exécuté par un programme d'ordinateur téléchargeable depuis un réseau de communication et/ou enregistré sur un support lisible par ordinateur et/ou exécutable par un processeur.

La figure 2 représente schématiquement la structure fonctionnelle générale d'un récepteur 30 de signaux de télécommunication conçu pour la mise en oeuvre du procédé d'estimation d'un glissement de fréquence porteuse décrit précédemment, par exemple un dispositif mobile de télécommunication apte à communiquer selon le standard IEEE 802.15.4.

Le dispositif mobile 30 comporte à cet effet une interface 32 d'émission/réception de signaux conformément au standard IEEE 802.15.4. Les signaux reçus en modulation O-QPSK par le dispositif mobile 30 sont transposés en bande de base grâce à un oscillateur (non représenté).

Pour estimer le glissement de fréquence porteuse engendré par cet oscillateur, le préambule d'un paquet reçu est transmis à des moyens 34 de calcul de corrélations partielles. Ces corrélations partielles portent sur plusieurs portions successives de la séquence d'étalement de référence du symbole #0, chaque corrélation partielle étant calculée entre une portion du préambule en bande de base, ce préambule comportant une succession de huit séquences d'étalement de référence du symbole #0, et une portion prédéterminée de la même séquence binaire de référence stockée et/ou générée par le dispositif mobile 30, selon plusieurs positions relatives possibles entre le préambule reçu et la portion prédéterminée.

Selon le standard IEEE 802.15.4, le glissement de fréquence porteuse doit être inférieur à 40 ppm à l'émission, ce qui permet un glissement maximal de 80 ppm entre l'émetteur et le récepteur. En outre, la sensibilité doit être meilleure que -85 dBm, celle-ci étant définie comme la puissance minimale nécessaire en réception pour obtenir un taux d'erreurs de paquets inférieur à 1 % avec des paquets de 20 octets.

Pour une fréquence porteuse maximale de 2,48 GHz, un glissement de fréquence porteuse à 80 ppm correspond à 200 kHz. Comme on a vu précédemment que $\left|\Delta_a f\right| \leq \dfrac{ND}{2L}$, alors cela impose que $\dfrac{ND}{2L} > 200\,kHz$. Soit, puisque D = 2 Mchips/s et L = 32, N > 6,4.

Pour des séquences d'étalement à 32 chips, cela permet d'envisager 8, 16 ou 32 corrélations partielles. On montre que N = 16 est un choix avantageux en termes de taux d'erreur en présence d'un glissement de fréquence porteuse.

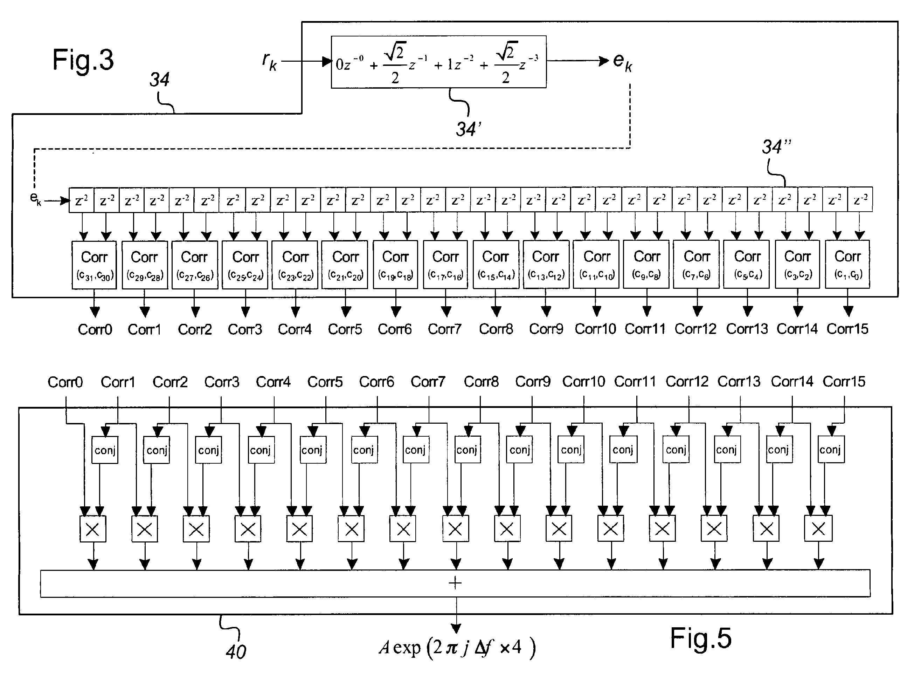

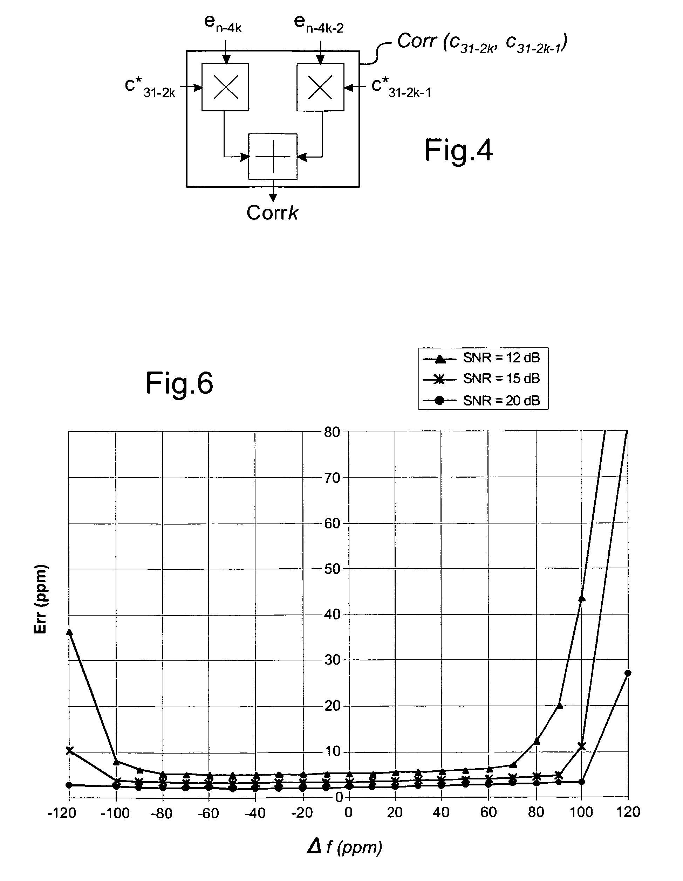

Les moyens de calcul 34 seront détaillés en référence aux figures 3 et 4, dans ce cas particulier de N = 16, avec un échantillonnage tel que P = 2.

Les séquences d'étalement de référence sont stockées et/ou générées dans des moyens de stockage et/ou de génération 36 du dispositif mobile 30. La séquence d'étalement de référence correspondant au symbole #0 est donc en particulier fournie par ces moyens de stockage et/ou de génération 36 aux moyens de calcul 34.

Le dispositif mobile 30 comporte en outre des moyens 38 de sélection d'une position de synchronisation $n_0$ parmi les positions relatives possibles entre le signal reçu et la séquence binaire de référence stockée et/ou générée par le dispositif mobile. Ces moyens de sélection 38 sont conçus pour mettre en oeuvre l'étape 12 précédemment décrite. Ils sont donc reliés aux moyens de calcul 34 pour récupérer les valeurs des corrélations partielles à chaque position relative possible.

Le dispositif mobile 30 comporte également des moyens 40 de détermination du glissement de fréquence porteuse par estimation d'un déphasage entre corrélations partielles calculées à la position de synchronisation sélectionnée. Ils sont donc reliés aux moyens de sélection 38 qui leur fournissent cette position de synchronisation. Ils sont conçus pour mettre en oeuvre l'étape 14 précédemment décrite.

Les moyens de détermination 40 seront détaillés en référence à la figure 5, dans ce cas particulier de N = 16, avec un échantillonnage tel que P = 2.

Le dispositif mobile 30 comporte en outre des moyens 42 de décodage et de correction d'un signal reçu et démodulé en bande de base fourni par l'interface 32. Ils sont conçus pour mettre en oeuvre les étapes 18 et 20 précédemment décrites, c'est-à-dire pour :

- calculer des coefficients de déphasages successifs, définis en fonction de la valeur du glissement de fréquence porteuse déterminée par les moyens 40,
- corriger le signal reçu et démodulé en bande de base à l'aide de ces coefficients de déphasages successifs, et
- corréler le signal reçu corrigé avec chacune des séquences d'étalement de référence correspondant aux symboles de référence #0 à #15 stockées et/ou générées par les moyens 36, et calculer les valeurs absolues de chacune de ces corrélations.

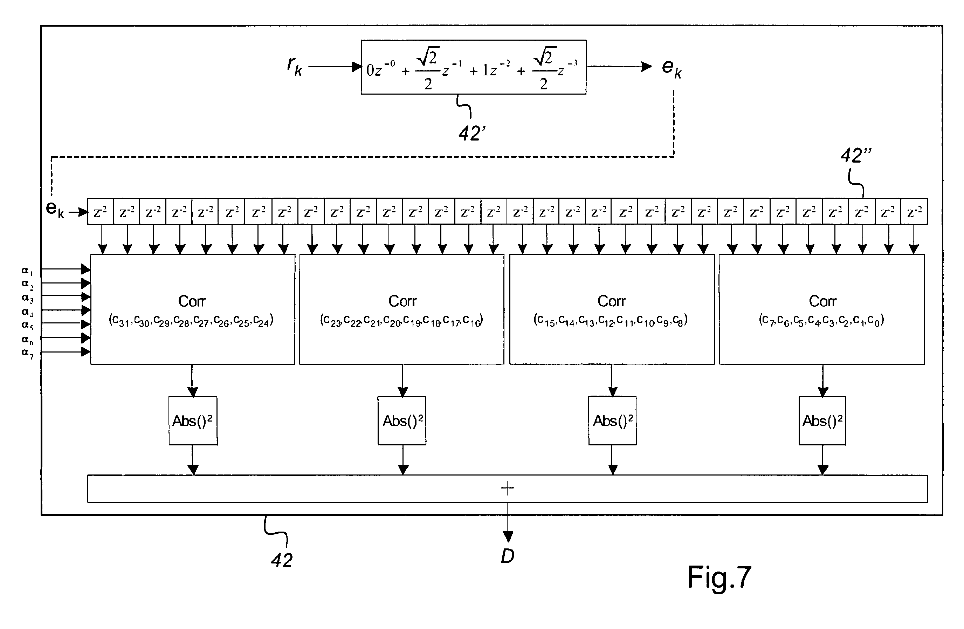

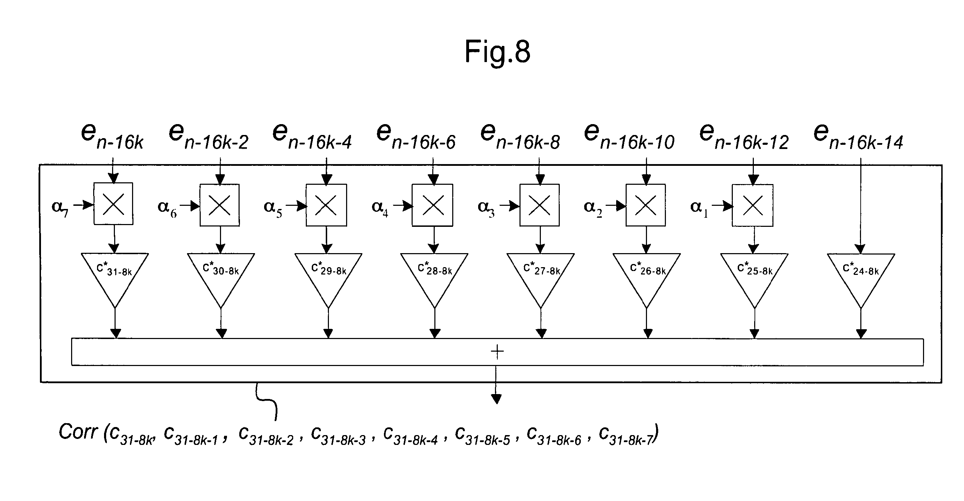

Ces moyens de décodage et de correction 42 seront détaillés en référence aux figures 7 et 8, dans ce cas particulier de N' = 4, avec un échantillonnage tel que P=2.

Enfin, le dispositif mobile 30 comporte des moyens 44 de sélection, parmi les valeurs absolues fournies par les moyens de décodage et de correction 42, de la valeur maximale et du symbole S correspondant. Ils sont conçus pour mettre en oeuvre l'étape 22 précédemment décrite.

La figure 3 représente en détail les moyens de calcul 34 dans le cas particulier de N = 16, avec un échantillonnage tel que P = 2. Dans ce cas, chaque corrélation partielle porte sur quatre échantillons couvrant deux chips. Le calcul des N = 16 corrélations partielles notées Corr0 à Corr15 est scindé en deux modules de calcul.

Un premier module 34' réalise un filtrage du signal reçu r sur une fenêtre de quatre échantillons, ce filtrage étant adapté à la forme en demi sinusoïde de chaque chip. Il fournit un signal e au second module 34" des moyens de calcul 34.

Le second module 34" comporte 32 retardateurs de 2 échantillons chacun disposés en série et fournissant 32 échantillons à 16 corrélateurs partiels Corr ($C_{31-2k}$, $C_{31-2k-1}$), $0 \leq k \leq 15$, portant chacun sur deux chips successifs de la séquence d'étalement de référence liée au symbole #0. Cette séquence d'étalement de référence est notée ($c_{31}$, ..., $c_0$) sur la figure 3.

Un corrélateur partiel quelconque Corr ($c_{31-2k}$, $c_{31-2k-1}$) du second module 34" est représenté en détail sur la figure 4. Deux échantillons $e_{n-4k}$ et $e_{n-4k-2}$ du signal e, décalés d'une période chip, sont fournis en entrée de ce corrélateur partiel. Ils sont multipliés respectivement par les valeurs complexes conjuguées $c^*_{31-2k}$ et $c^*_{31-2k-1}$ de deux chips successifs formant une portion de la séquence d'étalement de référence. Les deux valeurs obtenues sont alors additionnées pour fournir le résultat de corrélation partielle Corrk à une position relative possible entre le signal reçu et la portion de référence considérée. A l'instant d'échantillonnage suivant, deux échantillons suivants $e_{n-4k+1}$ et $e_{n-4k-1}$ du signal e, décalés d'une période chip, sont fournis en entrée de ce corrélateur partiel pour fournir le résultat de corrélation partielle Corrk à une position relative possible suivante entre le signal reçu et la portion de référence considérée. Ce calcul de corrélation partielle est répété pour toutes les positions relatives possibles entre le signal reçu et la portion de référence considérée, à savoir PL = 64 positions relatives différentes.

Comme indiqué précédemment en référence à l'étape 12 de la figure 1, ce calcul de corrélations partielles réalisé pour PL = 64 positions relatives différentes permet de sélectionner une position de synchronisation $n_0$. A cette position de synchronisation correspondent 16 valeurs particulières des corrélations partielles Corr0 à Corr15 reprises sur la figure 5. En reprenant les notations précédentes, les valeurs particulières fournies aux moyens de détermination 40 sont :

$$\forall k, 0 \leq k < 16, Corrk = CP_{n_0}^{(15-k)}.$$

Comme illustré sur la figure 5, les moyens de détermination 40 comportent 15 multiplicateurs pour multiplier chaque corrélation partielle Corr0 à Corr14 à la valeur complexe conjuguée de la corrélation partielle suivante Corr1 à Corr15. Les 15 résultats de ces multiplications sont additionnés pour fournir en sortie le signal $S_{est}$ défini précédemment.

La précision obtenue en prenant l'argument du signal $S_{est}$ fourni par les moyens de détermination 40 comme estimateur du glissement de fréquence porteuse est illustrée sur la figure 6. Les trois courbes représentées sur cette figure sont obtenues à partir de simulations en présence de bruit blanc gaussien pour différentes valeurs de rapport signal sur bruit : 12 dB, 15 dB et 20 dB. Bien entendu, la précision de l'estimation est d'autant meilleure que le rapport signal sur bruit est élevé. La courbe qui nous intéresse plus particulièrement est celle correspondant à un rapport signal sur bruit de 15 dB car il correspond à la sensibilité visée du récepteur. Dans ce cas, l'erreur quadratique moyenne sur l'estimation du glissement de fréquence porteuse est inférieure à 5 ppm sur une plage de ce glissement de fréquence porteuse comprise entre -80 ppm et +80 ppm.

La figure 7 représente en détail les moyens de décodage et de correction 42 dans le cas particulier de N' = 4, avec un échantillonnage tel que P = 2. Dans ce cas, chaque corrélation partielle de décodage porte sur seize échantillons couvrant huit chips. Le calcul des N' = 4 corrélations partielles de décodage est scindé en deux modules de calcul.

Un premier module 42', identique au module 34', réalise un filtrage du signal r adapté à la forme en demi sinusoïde de chaque chip. Il fournit un signal e au second module 42" des moyens de décodage et de correction 42.

Le second module 42" comporte 32 retardateurs de 2 échantillons chacun disposés en série et fournissant 32 échantillons à 4 corrélateurs partiels Corr ($C_{31-8k}$, $C_{31-8k-1}$, $C_{31-8k-2}$, $C_{31-8k-3}$, $C_{31-8k-4}$, $C_{31-8k-5}$, $C_{31-8k-6}$, $C_{31-8k-7}$), $0 \leq k < 4$, portant chacun sur 8 chips successifs de l'une des 16 séquences d'étalement de référence liées aux symboles #0 à #15. Cette séquence d'étalement quelconque sur laquelle sont calculées les 4 corrélations partielles est notée par souci de simplification ($C_{31}$, ..., $C_0$) sur cette figure et la suivante.

Un corrélateur partiel quelconque Corr ($C_{31-8k}$, $C_{31-8k-1}$, $C_{31-8k-2}$, $C_{31-8k-3}$, $C_{31-8k-4}$, $C_{31-8k-5}$, $C_{31-8k-6}$, $C_{31-8k-7}$) du second module 42" est représenté en détail sur la figure 8. Huit échantillons $e_{n-16k}$, $e_{n-16k-2}$, $e_{n-16k-4}$, $e_{n-16k-6}$, $e_{n-16k-8}$, $e_{n-16k-10}$, $e_{n-16k-12}$ et $e_{n-16k-14}$ du signal e, décalés deux à deux d'une période chip, sont fournis en entrée de ce corrélateur partiel. Ils sont multipliés respectivement par les huit coefficients de déphasages successifs $\alpha_7$ à $\alpha_0$ (avec toutefois $\alpha_0$ = 1, ce qui supprime une multiplication) pour réaliser la correction de glissement de fréquence porteuse, puis corrélés aux huit chips successifs $C_{31-8k}$, $C_{31-8k-1}$, $C_{31-8k-2}$, $C_{31-8k-3}$, $C_{31-8k-4}$, $C_{31-8k-5}$, $C_{31-8k-6}$, $C_{31-8k-7}$ formant une portion de la séquence d'étalement de référence considérée. Les huit valeurs obtenues sont alors additionnées pour fournir le résultat de corrélation partielle considérée.

Comme illustré sur la figure 7, le module 42" effectue ensuite le calcul de la valeur absolue au carré de ce résultat pour chaque corrélateur partiel puis ajoute les quatre valeurs absolues partielles pour fournir une variable de décision D du symbole considéré.

Les calculs précités réalisés par les moyens de décodage et de correction 42 sont répétés pour chaque symbole #0 à #15.

Un autre effet du glissement de fréquence porteuse est d'engendrer également un glissement de la fréquence des symboles. Ces deux glissements de fréquences sont directement liés par la relation suivante :

$$\delta f = \frac{\Delta_a f}{f_c},$$ où $\delta f$ représente à la fois le glissement relatif de la fréquence

des symboles et le glissement relatif de la fréquence porteuse, $\Delta_a f$ est le glissement absolu de fréquence porteuse et $f_c$ est la fréquence porteuse.

Le glissement relatif de la fréquence des symboles entraîne un décalage régulier de la synchronisation des symboles au niveau du récepteur. Si $t_0$ est un instant initial où la synchronisation au niveau des symboles est supposée parfaite, alors le décalage des symboles en fonction du temps t est -(t - $t_0$)$\delta f$ ($\delta f$ étant supposé très inférieur à 1).

Cette expression traduit le fait que lorsque $\delta f$ est positif, le récepteur échantillonne trop vite par rapport à l'émetteur, ce qui génère un retard par rapport au signal reçu : il faut alors enlever un échantillon lorsque ce décalage est supérieur à un demi pas d'échantillonnage. On en déduit qu'au bout de $1/2\delta f$ échantillons, puis tous les $1/\delta f$ échantillons, il faut enlever un échantillon pour compenser ce décalage.

Lorsque $\delta f$ est négatif, le récepteur n'échantillonne pas assez vite par rapport à l'émetteur, ce qui génère une avance par rapport au signal reçu : il faut alors ajouter un échantillon lorsque ce décalage est supérieur à un demi pas d'échantillonnage. On en déduit qu'au bout de $1/2\delta f$ échantillons, puis tous les $1/\delta f$ échantillons, il faut ajouter un échantillon pour compenser ce décalage.

Lorsque l'on souhaite déterminer la récurrence des suppressions ou ajouts d'échantillons à l'aide d'un tableau de valeurs précalculées, il suffit d'associer au tableau Tab défini précédemment, un tableau TabSymb tel que TabSymb

$$[0] = \text{infini et } \forall i,\ 0 \le i < 8,\ TabSymb[i] = \frac{f_c}{2i\Delta_a f_{\min}}\ .$$

Pour $f_c = 2{,}45\ GH_z$ et $\Delta_a f_{min} = 62500\ Hz$, cela donne TabSymb[1] = 19600, TabSymb[2] = 9800, etc.

Une valeur donnée par ce tableau donne la position du premier échantillon à ajouter ou enlever, les suivants étant ensuite espacés de deux fois cette valeur.

Il apparaît clairement que le procédé et le dispositif décrits précédemment permettent d'améliorer les solutions existantes en présentant de meilleures performances en termes de précision de l'estimation et de simplicité de calcul.

## Revendications

1. Procédé d'estimation d'un glissement de fréquence porteuse dans un récepteur de signaux de télécommunication, comportant :

   - une étape (10) de calcul de corrélations partielles portant sur plusieurs portions successives d'une séquence binaire de référence, chaque corrélation partielle étant calculée entre une portion d'un signal reçu par le récepteur à ladite fréquence porteuse, ce signal comportant ladite séquence binaire de référence, et une portion prédéterminée de ladite séquence binaire de référence stockée et/ou générée par le récepteur, selon plusieurs positions relatives possibles entre le signal reçu et la portion prédéterminée, et
   - une étape (14, 16) de détermination du glissement de fréquence porteuse à partir des corrélations partielles calculées,

   **caractérisé en ce qu'**il comporte une étape (12) de sélection d'une position de synchronisation parmi les positions relatives possibles entre le signal reçu et la séquence binaire de référence stockée et/ou générée par le récepteur, et **en ce que** l'étape de détermination comporte l'estimation (14) d'un déphasage entre corrélations partielles calculées à la position de synchronisation sélectionnée.

2. Procédé d'estimation d'un glissement de fréquence porteuse selon la revendication 1, dans lequel l'étape de détermination (14, 16) comporte l'estimation (14) d'un déphasage moyen entre les corrélations partielles successives calculées à la position de synchronisation sélectionnée, notamment par estimation de l'espérance mathématique du produit entre deux corrélations partielles successives quelconques calculées à la position de synchronisation sélectionnée.

3. Procédé d'estimation d'un glissement de fréquence porteuse selon la revendication 2, dans lequel le glissement de fréquence porteuse est déterminé selon la relation $\hat{\Delta f} = \dfrac{N}{2\pi PL}\hat{\Delta\varphi}$, où $\hat{\Delta f}$ est le glissement de fréquence porteuse normalisé par une fréquence d'échantillonnage du signal reçu, $\hat{\Delta\varphi}$ le déphasage moyen estimé, N le nombre de corrélations partielles successives, L le nombre de bits de la séquence binaire de référence, UN représentant alors le nombre de bits de chaque portion sur laquelle est réalisée une corrélation partielle, et P le nombre d'échantillons par bit de la séquence binaire de référence.

4. Procédé d'estimation d'un glissement de fréquence porteuse selon l'une quelconque des revendications 1 à 3, comportant en outre une étape (18, 20) de correction du glissement de fréquence porteuse par compensation de ce glissement sur le signal reçu à l'aide de la valeur déterminée du glissement de fréquence porteuse.

5. Procédé d'estimation d'un glissement de fréquence porteuse selon la revendication 4, dans lequel l'étape de correction (18, 20) comporte :

   - une étape (18) de calcul de coefficients de déphasages successifs, définis en fonction de la valeur déterminée du glissement de fréquence porteuse, et

- une étape (20) d'application de ces coefficients de déphasages successifs à des échantillons du signal reçu.

6. Procédé d'estimation d'un glissement de fréquence porteuse selon la revendication 5, dans lequel les coefficients de déphasages successifs sont calculés par encadrements à l'aide de tableaux de données précalculées.

7. Procédé d'estimation d'un glissement de fréquence porteuse selon l'une quelconque des revendications 1 à 6, dans lequel la séquence binaire de référence est obtenue par étalement de spectre à séquence directe d'un symbole de référence, notamment dans le cadre d'une transmission conforme à la norme IEEE 802.15.4 prévoyant une transmission de symboles par paquets, la séquence binaire de référence étant contenue dans le préambule de chaque paquet reçu.

8. Procédé d'estimation d'un glissement de fréquence porteuse selon la revendication 7, dans lequel, le glissement de fréquence porteuse s'accompagnant d'un glissement de fréquence des symboles transmis, on compense le décalage engendré dans les échantillons prélevés par le récepteur par l'ajout ou la suppression d'un échantillon chaque fois que ce décalage devient supérieur, en avance ou en retard, à un demi pas d'échantillonnage.

9. Programme d'ordinateur téléchargeable depuis un réseau de communication et/ou enregistré sur un support lisible par ordinateur et/ou exécutable par un processeur, **caractérisé en ce qu'**il comprend des instructions de code de programme pour l'exécution des étapes d'un procédé d'estimation d'un glissement de fréquence porteuse selon l'une quelconque des revendications 1 à 8 lorsque ledit programme est exécuté sur un ordinateur.

10. Dispositif mobile de télécommunication (30) comportant des moyens d'estimation d'un glissement de fréquence porteuse, ces moyens comportant :

- des moyens (36) de stockage et/ou de génération d'une séquence binaire de référence,
- des moyens (34) de calcul de corrélations partielles portant sur plusieurs portions successives de la séquence binaire de référence, chaque corrélation partielle étant calculée entre une portion d'un signal reçu par le récepteur à ladite fréquence porteuse, ce signal comportant la séquence binaire de référence, et une portion prédéterminée de ladite séquence binaire de référence stockée et/ou générée par le dispositif mobile, selon plusieurs positions relatives possibles entre le signal reçu et la portion prédéterminée, et
- des moyens (40) de détermination du glissement de fréquence porteuse à partir des corrélations partielles calculées,

**caractérisé en ce qu'**il comporte des moyens (38) de sélection d'une position de synchronisation parmi les positions relatives possibles entre le signal reçu et la séquence binaire de référence stockée et/ou générée par le dispositif mobile (30), et **en ce que** les moyens de détermination (40) comportent des moyens d'estimation d'un déphasage entre corrélations partielles calculées à la position de synchronisation sélectionnée.

**Claims**

1. A method for estimating a carrier-frequency offset in a telecommunication signals receiver, comprising:

- a step (10) of computing partial correlations relating to several successive portions of a reference binary sequence, each partial correlation being computed between a portion of a signal received by the receiver at said carrier frequency, this signal comprising said reference binary sequence, and a predetermined portion of said reference binary sequence stored and/or generated by the receiver, according to several possible relative positions between the received signal and the predetermined portion, and
- a step (14, 16) of determining the carrier-frequency offset from the computed partial correlations,

**characterized in that** it comprises a step (12) of selecting a synchronization position from the possible relative positions between the received signal and the reference binary sequence stored and/or generated by the receiver, and wherein the determination step comprises the estimation (14) of a phase shift between computed partial correlations at the selected synchronization position.

2. The method for estimating a carrier-frequency offset as claimed in claim 1, wherein the determination step (14, 16) comprises the estimation (14) of an average phase shift between the successive partial correlations computed at the selected synchronization position, notably by estimating the mathematical expectation of the product between any two successive partial correlations computed at the selected synchronization position.

3. The method for estimating a carrier-frequency offset as claimed in claim 2, wherein the carrier-frequency offset is determined according to the relation $\hat{\Delta f} = \dfrac{N}{2\pi PL}\hat{\Delta \varphi}$, where $\hat{\Delta f}$ is the carrier-frequency offset normalized by a sampling frequency of the received signal, $\hat{\Delta \varphi}$ is the estimated average phase shift, N is the number of successive partial correlations, L is the number of bits of the reference binary sequence, L/N then representing the number of bits of each portion on which a partial correlation is carried out, and P is the number of samples per bit of the reference binary sequence.

4. The method for estimating a carrier-frequency offset as claimed in any one of claims 1 to 3, further comprising a step (18, 20) of correcting the carrier-frequency offset by compensating for this offset on the received signal with the aid of the determined value of the carrier-frequency offset.

5. The method for estimating a carrier-frequency offset as claimed in claim 4, wherein the correction step (18, 20) comprises:

   - a step (18) of computing successive phase-shift coefficients defined as a function of the determined value of the carrier-frequency offset, and
   - a step (20) of applying these successive phase-shift coefficients to samples of the received signal.

6. The method for estimating a carrier-frequency offset as claimed in claim 5, wherein the successive phase-shift coefficients are computed by surroundings with the aid of tables of precomputed data.

7. The method for estimating a carrier-frequency offset as claimed in any one of claims 1 to 6, wherein the reference binary sequence is obtained by direct-sequence spread spectrum of a reference symbol, notably in the context of a transmission complying with the standard IEEE 802.15.4 providing a transmission of symbols by packets, the reference binary sequence being contained in the preamble of each received packet.

8. The method for estimating a carrier-frequency offset as claimed in claim 7, wherein, since the carrier-frequency offset is accompanied by a frequency offset of the transmitted symbols, the shift generated in the samples taken by the receiver is compensated for by the addition or deletion of a sample every time this shift becomes greater, ahead of or behind, than a half-sampling pitch.

9. A computer program that can be downloaded from a communication network and/or saved on a computer-readable medium and/or executed by a processor, said program comprising program code instructions for the execution of the steps of a method for estimating a carrier-frequency offset as claimed in any one of claims 1 to 8 when said program is executed on a computer.

10. A mobile telecommunication device (30) comprising means for estimating a carrier-frequency offset, these means comprising:

   - means (36) for storing and/or generating a reference binary sequence,
   - means (34) for computing partial correlations relating to several successive portions of the reference binary sequence, each partial correlation being computed between a portion of a signal received by the receiver at said carrier frequency, this signal comprising the reference binary sequence, and a predetermined portion of said reference binary sequence stored and/or generated by the mobile device, according to several possible relative positions between the received signal and the predetermined portion, and
   - means (40) for determining the carrier-frequency offset from the computed partial correlations,

   **characterized in that** it comprises means (38) for selecting a synchronization position from the possible relative positions between the received signal and the reference binary sequence stored and/or generated by the mobile device (30), and **in that** the determination means (40) comprise means for estimating a phase shift between partial correlations computed at the selected synchronization position.

**Patentansprüche**

1. Verfahren zum Schätzen einer Trägerfrequenzverschiebung in einem Telekommunikationssignalempfänger, das Folgendes umfasst:

   - einen Schritt (10) zum Berechnen von partiellen Korrelationen, die sich auf mehrere aufeinanderfolgende Abschnitte einer binären Bezugssequenz beziehen, wobei jede partielle Korrelation zwischen einem Abschnitt eines von dem Empfänger bei der Trägerfrequenz empfangenen Signals, wobei dieses Signal die binäre Bezugssequenz aufweist, und einem vorbestimmten Abschnitt der von dem Empfänger gespeicherten und/oder erzeugten binären Bezugssequenz gemäß mehreren möglichen Relativpositionen zwischen dem empfangenen Signal und dem vorbestimmten Abschnitt berechnet wird, und
   - einen Schritt (14, 16) zum Bestimmen der Trägerfrequenzverschiebung ausgehend von den berechneten partiellen Korrelationen,

   **dadurch gekennzeichnet, dass** es einen Schritt (12) zum Auswählen einer Synchronisationsposition aus den möglichen Relativpositionen zwischen dem empfangenen Signal und der von dem Empfänger gespeicherten und/ oder erzeugten binären Bezugssequenz umfasst und der Bestimmungsschritt das Schätzen (14) einer Phasenverschiebung zwischen an der ausgewählten Synchronisationsposition berechneten partiellen Korrelationen umfasst.

2. Verfahren zum Schätzen einer Trägerfrequenzverschiebung nach Anspruch 1, bei dem der Bestimmungsschritt (14, 16) das Schätzen (14) einer durchschnittlichen Phasenverschiebung zwischen den an der ausgewählten Synchronisationsposition berechneten, aufeinanderfolgenden partiellen Korrelationen umfasst, insbesondere durch Schätzen des Erwartungswerts des Produkts aus zwei beliebigen, an der ausgewählten Synchronisationsposition berechneten, aufeinanderfolgenden partiellen Korrelationen.

3. Verfahren zum Schätzen einer Trägerfrequenzverschiebung nach Anspruch 2, bei dem die Trägerfrequenzverschiebung gemäß der Beziehung $\widehat{\Delta f} = \frac{N}{2\pi PL} \widehat{\Delta \varphi}$ bestimmt wird, wobei $\hat{\Delta} f$ die durch eine Abtastfrequenz des empfangenen Signals normalisierte Trägerfrequenzverschiebung ist, $\hat{\Delta}\varphi$ die geschätzte durchschnittliche Phasenverschiebung ist, N die Anzahl von aufeinanderfolgenden partiellen Korrelationen ist, L die Bitanzahl der binären Bezugssequenz ist, wobei L/N dann die Bitanzahl jedes Abschnitts, an dem eine partielle Korrelation erfolgt, darstellt, und P die Anzahl der Abtastwerte pro Bit aus der binären Bezugssequenz ist.

4. Verfahren zum Schätzen einer Trägerfrequenzverschiebung nach einem der Ansprüche 1 bis 3, das ferner einen Schritt (18, 20) zum Korrigieren der Trägerfrequenzverschiebung durch Kompensation dieser Verschiebung am empfangenen Signal mit dem ermittelten Wert der Trägerfrequenzverschiebung umfasst.

5. Verfahren zum Schätzen einer Trägerfrequenzverschiebung nach Anspruch 4, bei dem der Korrekturschritt (18, 20) Folgendes umfasst:

   - einen Schritt (18) zum Berechnen von Koeffizienten von aufeinanderfolgenden Phasenverschiebungen, die in Abhängigkeit von dem ermittelten Wert der Trägerfrequenzverschiebung definiert werden, und
   - einen Schritt (20) zum Anwenden dieser Koeffizienten von aufeinanderfolgenden Phasenverschiebungen auf Abtastwerte des empfangenen Signals.

6. Verfahren zum Schätzen einer Trägerfrequenzverschiebung nach Anspruch 5, bei dem die Koeffizienten von aufeinanderfolgenden Phasenverschiebungen durch Rahmen mittels Tabellen mit vorkalkulierten Daten berechnet werden.

7. Verfahren zum Schätzen einer Trägerfrequenzverschiebung nach einem der Ansprüche 1 bis 6, bei dem die binäre Bezugssequenz durch ein Direktsequenz-Spreizspektrumverfahren eines Bezugssymbols, insbesondere im Rahmen einer Übertragung entsprechend dem Standard IEEE 802.15.4, das eine Symbolübertragung in Paketen vorsieht, erhalten wird, wobei die binäre Bezugssequenz in der Präambel jedes empfangenen Pakets enthalten ist.

8. Verfahren zum Schätzen einer Trägerfrequenzverschiebung nach Anspruch 7, bei dem aufgrund dessen, dass die Trägerfrequenzverschiebung mit einer Frequenzverschiebung der übertragenen Symbole einhergeht, die Verschiebung, die bei den von dem Empfänger entnommenen Abtastwerten erzeugt wird, durch Hinzufügen oder Eliminieren eines Abtastwerts kompensiert wird, jedes Mal, wenn diese Verschiebung voreilend oder nacheilend größer wird als ein halber Abtastabstand.

9. Computerprogramm, das von einem Kommunikationsnetz heruntergeladen werden kann und/oder auf einem computerlesbaren Träger gespeichert ist und/oder von einem Prozessor ausgeführt werden kann, **dadurch gekennzeichnet, dass** es Programmcodebefehle für die Ausführung der Schritte eines Verfahrens zum Schätzen einer Trägerfrequenzverschiebung nach einem der Ansprüche 1 bis 8 umfasst, wenn das Programm auf einem Computer ausgeführt wird.

10. Mobile Telekommunikationsvorrichtung (30) mit Mitteln zum Schätzen einer Trägerfrequenzverschiebung, wobei diese Mittel Folgendes umfassen:

- Mittel (36) zum Speichern und/oder Erzeugen einer binären Bezugssequenz,
- Mittel (34) zum Berechnen von partiellen Korrelationen, die sich auf mehrere aufeinanderfolgende Abschnitte der binären Bezugssequenz beziehen, wobei jede partielle Korrelation zwischen einem Abschnitt eines von dem Empfänger bei der Trägerfrequenz empfangenen Signals, wobei dieses Signal die binäre Bezugssequenz aufweist, und einem vorbestimmten Abschnitt der von der mobilen Vorrichtung gespeicherten und/oder erzeugten binären Bezugssequenz gemäß mehreren möglichen Relativpositionen zwischen dem empfangenen Signal und dem vorbestimmten Abschnitt berechnet wird, und
- Mittel (40) zum Bestimmen der Trägerfrequenzverschiebung ausgehend von den berechneten partiellen Korrelationen,

**dadurch gekennzeichnet, dass** sie Mittel (38) zum Auswählen einer Synchronisationsposition aus den möglichen Relativpositionen zwischen dem empfangenen Signal und der von der mobilen Vorrichtung (30) gespeicherten und/oder erzeugten binären Bezugssequenz aufweist und die Bestimmungsmittel (40) Mittel zum Schätzen einer Phasenverschiebung zwischen an der ausgewählten Synchronisationsposition berechneten partiellen Korrelationen aufweist.

## Fig.1

```
┌──────────┐
│    10    │
└──────────┘
     │
     ▼
┌──────────┐                              ┌──────────┐
│    12    │                              │    18    │
└──────────┘                              └──────────┘
     │                                         │
     ▼                                         ▼
┌──────────┐                              ┌──────────┐
│    14    │                              │    20    │
└──────────┘                              └──────────┘
     │                                         │
     ▼                                         ▼
┌──────────┐                              ┌──────────┐
│    16    │                              │    22    │
└──────────┘                              └──────────┘
     │                                         │
     ▼                                         ▼
     $\hat{\Delta f}$                          S
```

## Fig.2

EP 2 221 981 B1

Fig.3

34

$$r_k \rightarrow \boxed{0z^{-0} + \frac{\sqrt{2}}{2}z^{-1} + 1z^{-2} + \frac{\sqrt{2}}{2}z^{-3}} \rightarrow e_k$$

34'

34"

$e_k \rightarrow$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$

| Corr $(c_{31},c_{30})$ | Corr $(c_{29},c_{28})$ | Corr $(c_{27},c_{26})$ | Corr $(c_{25},c_{24})$ | Corr $(c_{23},c_{22})$ | Corr $(c_{21},c_{20})$ | Corr $(c_{19},c_{18})$ | Corr $(c_{17},c_{16})$ | Corr $(c_{15},c_{14})$ | Corr $(c_{13},c_{12})$ | Corr $(c_{11},c_{10})$ | Corr $(c_9,c_8)$ | Corr $(c_7,c_6)$ | Corr $(c_5,c_4)$ | Corr $(c_3,c_2)$ | Corr $(c_1,c_0)$ |

Corr0  Corr1  Corr2  Corr3  Corr4  Corr5  Corr6  Corr7  Corr8  Corr9  Corr10  Corr11  Corr12  Corr13  Corr14  Corr15

Corr0  Corr1  Corr2  Corr3  Corr4  Corr5  Corr6  Corr7  Corr8  Corr9  Corr10  Corr11  Corr12  Corr13  Corr14  Corr15

conj × 16

× × × × × × × × × × × × × × × ×

+

40

$$A\exp(2\pi j\,\Delta f \times 4)$$

Fig.5

$e_{n-4k}$  $e_{n-4k-2}$  $Corr\ (c_{31-2k},\ c_{31-2k-1})$

$c^*_{31-2k}$  $\times$  $\times$  $c^*_{31-2k-1}$

$+$

**Fig.4**

Corr*k*

**Fig.6**

| | SNR = 12 dB |
| | SNR = 15 dB |
| | SNR = 20 dB |

$$r_k \longrightarrow \boxed{0z^{-0} + \frac{\sqrt{2}}{2}z^{-1} + 1z^{-2} + \frac{\sqrt{2}}{2}z^{-3}} \longrightarrow e_k$$

42'

42''

$e_k \rightarrow$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$ $z^{-2}$

$\alpha_1$ $\alpha_2$ $\alpha_3$ $\alpha_4$ $\alpha_5$ $\alpha_6$ $\alpha_7$

Corr
$(c_{31}, c_{30}, c_{29}, c_{28}, c_{27}, c_{26}, c_{25}, c_{24})$

Corr
$(c_{23}, c_{22}, c_{21}, c_{20}, c_{19}, c_{18}, c_{17}, c_{16})$

Corr
$(c_{15}, c_{14}, c_{13}, c_{12}, c_{11}, c_{10}, c_9, c_8)$

Corr
$(c_7, c_6, c_5, c_4, c_3, c_2, c_1, c_0)$

$\mathrm{Abs()^2}$    $\mathrm{Abs()^2}$    $\mathrm{Abs()^2}$    $\mathrm{Abs()^2}$

$+$

42

$D$

Fig.7

Fig.8

## RÉFÉRENCES CITÉES DANS LA DESCRIPTION

**Documents brevets cités dans la description**

- US 20070002937 A
- WO 0161880 A
- WO 02080404 A
- US 20080205492 A

**Littérature non-brevet citée dans la description**

- **C. Bernier et al.** An ultra low power Soc for 2.4GHz IEEE802.15.4 wireless communications. *ESSIRC 2008, 34th European Solid-State Circuits Conference,* 15 Septembre 2008, 426-429